# EUROPEAN PATENT APPLICATION

(11) **EP 1 415 588 A2**
(43) Date of publication of application: **06.05.2004**
(21) Application number: 03256575.6
(22) Date of filing: 17.10.2003
(51) Int. Cl.: A47L 15/48

(54) **Dishwasher**

(30) Priority: 01.11.2002 KR 2002067443; 28.03.2003 KR 2003019729
(71) Applicant: SAMSUNG ELECTRONICS CO., LTD., Suwon-City, Kyungki-do (KR)
(72) Inventor: Jung, Tae-Young, Taean-Eub, Hwasung-City, Kyungki-Do (KR); Hur, Woon-Gu, Paldal-Gu, Suwon-City, Kyungki-Do (KR); Jang, Sam-Young, Suji-Eub, Yongin-City, Kyungki-Do (KR); Woo, Je-Hak, Paldal-Gu, Suwon-City, Kyungki-Do (KR); Son, Wang-Seok, Seocho-Gu, Seoul (KR)
(74) Representative: Grey, Ian Michael

(57) **Abstract**

A dishwasher is disclosed. It has a washing chamber to receive items to be washed in washing water and means to generate and supply hot air to the washing chamber to heat said items and/or the washing water. The means includes an air heater remote from the chamber.

## Description

The present invention relates to a dishwasher having a washing chamber to receive items to be washed in washing water.

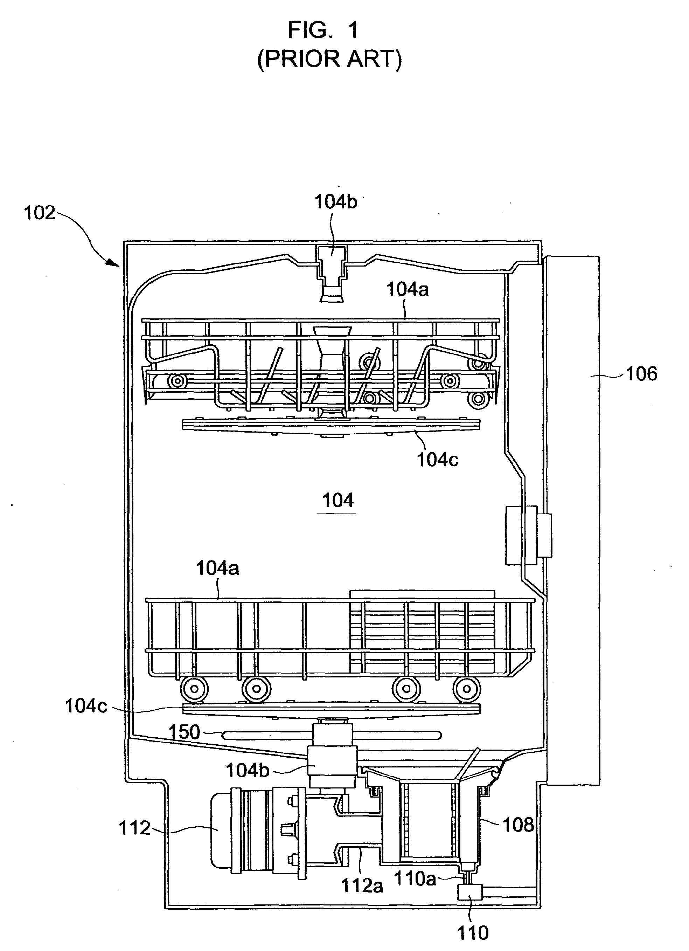

A dishwasher is a machine which washes kitchen utensils, such as dishes, bowls, etc., automatically, by spraying cold water or hot water onto the kitchen utensils held in racks installed in a washing chamber so as to remove food impurities and particles from the kitchen utensils. The dishwasher is provided with a pump and a spray nozzle to feed and spray washing or rinsing water onto the kitchen utensils, and a heater to heat the washing or rinsing water so as to produce hot water. A conventional known dishwasher will now be described with reference to Figure 1.

Figure 1 is a sectional view of a conventional dishwasher 102 having an internal heater and a washing chamber 104 with a front opening. A door 106 is hinged to the front of the dishwasher 102 to enable the washing chamber 104 to be opened and closed. Upper and lower racks 104a are installed at respective upper and lower portions inside the washing chamber 104 to support kitchen utensils therein and are able to slide backward or forward into or out of the washing chamber 104. Upper and lower spray nozzles 104c are installed under the upper and lower racks 104a, respectively, to spray water onto the kitchen utensils held in the upper and lower racks 104a.

A heater 150 is installed at the bottom of the washing chamber 104 under the lower rack 104a to directly heat washing or rinsing water. This heater arrangement 150 is a so-called "internal heater" as it is inside the washing chamber 104. When the washing or rinsing water is fed into the washing chamber 104 the heater 150 is immersed in the water to heat it. During operation of the dishwasher, the spray of hot water from the spray nozzles 104c removes impurities such as food dregs, from the kitchen utensils. If the impurities are dried and stuck to the kitchen utensils, they are more easily removed when the kitchen utensils are immersed in the hot water for a time to allow the food impurities to be sufficiently soaked in the hot water. During a rinsing operation, the hot water is used to heat the kitchen utensils. Therefore, at a last rinsing stage of the rinsing operation, any moisture on the kitchen utensils evaporates more quickly during a subsequent drying operation, due to their latent heat.

A water-collecting tank 108 is installed in a space defined in the washing chamber 104 at a position under the lower rack 104a, and collects the washing or rinsing water. A drain pump 110 and a water circulation pump 112 are connected to the water-collecting tank 108 via a drain hose 110a and a water circulation hose 112a, respectively. The water circulation hose 112a is further connected to a water feed pipe 104b which is connected to the upper and lower spray nozzles 104c.

During operation of the conventional dishwasher 102, washing or rinsing water is sprayed from the upper and lower spray nozzles 104c onto the kitchen utensils held in the upper and lower racks 104a to wash or to rinse them, whereafter said water is collected in the water-collecting tank 108. The washing or rinsing water is then transferred from the water-collecting tank 108 to the water feed pipe 104b through the water circulation hose 112a by the water circulation pump 112, thus being fed to the upper and lower spray nozzles 104c and sprayed again from the upper and lower spray nozzles 104c. Therefore, the washing or rinsing water continuously circulates in the washing chamber 104 for a predetermined washing or rinsing time period. When the predetermined washing or rinsing time period is complete, the washing or rinsing water is drained from the water-collecting tank 108 through the drain hose 110a by the drain pump 110.

However, a conventional dishwasher having an internal heater suffers the following problems. Since the heater must be immersed in the washing or rinsing water to produce hot water, calcites are deposited on the surface of the heater, thus reducing its life span. Furthermore, excessive time is consumed to produce the hot water because the heater of the conventional dishwasher directly heats the washing or rinsing water. The heater of the conventional dishwasher also heats air of the washing chamber during a drying operation. This results in the kitchen utensils held in the upper and lower racks inside the washing chamber being excessively heated, and so they are too hot for a user to remove just after the drying operation.

In another type of conventional dishwasher, the water feed pipe is located outside the washing chamber and is connected to the spray nozzles in the washing chamber. The heater is installed inside the water feed pipe to heat the water as it passes through the water feed pipe and supplies it to the spray nozzles. Such a dishwasher is a so-called "dishwasher having external heater" in the following description. A dishwasher having an external heater is also problematic in that, in use, the heater must be immersed in the water to produce hot water which results in calcites being deposited on a surface of the heater, thereby reducing the life span of the heater in a similar manner to that described above for dishwashers having internal heaters. Furthermore, excessive time and power are consumed because the heater directly heats the water. To prevent the above mentioned problem of kitchen utensils being excessively heated during a drying operation, the dishwasher rinses the kitchen utensils with heated water in a last rinsing stage of a rinsing operation, in place of heating air of the washing chamber. This heats the kitchen utensils to an appropriate temperature so that they quickly dry due to their latent heat. However, as the kitchen utensils must be rinsed with heated water at the last rinsing stage of the rinsing operation, immediately before the drying operation, it is not possible to have a drying operation without using hot water. This consumes excessive power and reduces the energy efficiency of the dishwasher.

A dishwasher according to the present invention is characterised by means to generate and supply hot air to the washing chamber to heat said items and/or the washing water, said means including an air heater remote from the chamber.

In one embodiment, the air heater is mounted in an airflow conduit having an inlet port and an outlet port.

Preferably, the dishwasher includes a fan operable to blow or draw air through the airflow conduit across the air heater.

In a preferred embodiment, the outlet port communicates the airflow conduit with the washing chamber.

Preferably, the inlet port communicates the washing chamber with the airflow conduit such that air in the chamber circulates through the airflow conduit via the inlet and outlet ports.

Alternatively, the inlet port communicates the airflow conduit with the outside of the dishwasher such that air is drawn into the chamber through the airflow conduit from outside.

In another embodiment, a second inlet port communicates the washing chamber with the airflow conduit such that air is drawn into the chamber via the airflow conduit from the washing chamber through the second inlet port and also from outside through the first inlet port.

According to the invention, there is also provided a method of heating air and/or water in a dishwasher comprising a chamber to receive items to be washed in washing water and an air heater remote from the chamber, the method including the steps of heating air using the heater and supplying said heated air to the chamber.

Preferred embodiments of the invention will now be described, by way of example only, with reference to Figures 2 to 5 of the accompanying drawings, in which:
Figure 1 is a sectional view of a conventional dishwasher;
Figure 2A is a sectional view of a dishwasher having an air generator, according to a first embodiment of the present invention;
Figure 2B is a block diagram showing the functional construction of the dishwasher of Figure 2A;
Figure 3 is a sectional view of a dishwasher having an air generator, according to a second embodiment of the present invention;
Figure 4 is a front view of the air generator included in the dishwasher of Figure 3; and
Figure 5 is a rear view of the air generator of Figure 4.

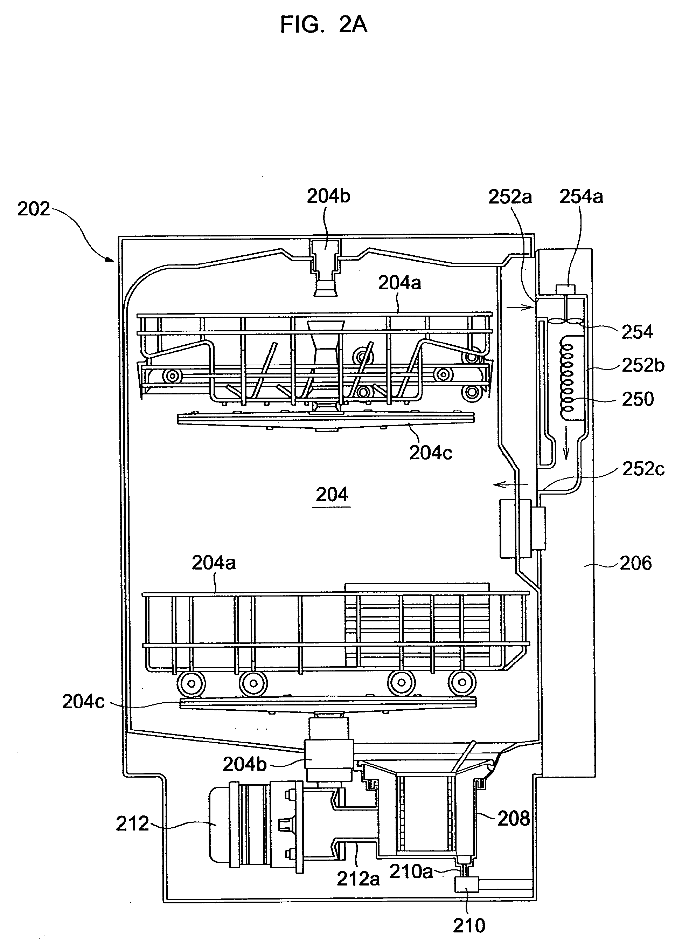

Figure 2A is a sectional view of a dishwasher having an air generator, according to a first embodiment of the present invention. As shown in Figure 2A, the dishwasher 202 according to an embodiment of the present invention has a cabinet, with a washing chamber 204 formed therein which is open at a front thereof. A door 206 is hinged to a front of the cabinet so as to open or to close the open front of the washing chamber 204. Upper and lower racks 204a are installed at upper and lower portions, respectively, inside the washing chamber 204 to support kitchen utensils therein. The upper and lower racks 204a are removably installed in the washing chamber 204 and are able to slide backward or forward. Upper and lower spray nozzles 204c are installed at positions under the upper and lower racks 204a, respectively, to spray water onto the kitchen utensils held in the upper and lower racks 204a. A water-collecting tank 208 is installed in the bottom of the washing chamber 204 under the lower rack 204a to collect the washing or rinsing water. A drain pump 210 and a water circulation pump 212 are connected to the water-collecting tank 208 via a drain hose 210a and a water circulation hose 212a, respectively. The water circulation hose 212a is further connected to a water feed pipe 204b which is connected to the upper and lower spray nozzles 204c.

During operation of a dishwasher 202, the washing or rinsing water sprayed from the upper and lower spray nozzles 204c onto the kitchen utensils held in the upper and lower racks 204a, is collected in the water-collecting tank 208, and is fed to the water feed pipe 204b through the water circulation hose 212a by the water circulation pump 212. The water is then fed to the upper and lower spray nozzles 204c so as to be sprayed again from the upper and lower spray nozzles 204c. Thus, the washing or rinsing water continuously circulates in the washing chamber 204 for a predetermined washing or rinsing time period. When the predetermined washing or rinsing time period is completed, the washing or rinsing water is drained from the water-collecting tank 208 through the drain hose 210a by the drain pump 210.

The dishwasher 202 has an air generator to heat and circulate air within the washing chamber 204. The air generator includes a heater 250 and a fan 254. An inside surface of the door 206 faces the washing chamber 204 and has an air inlet port 252a and a blast port 252c formed therein. The air inlet port 252a and the blast port 252c communicate with each other through a blowpipe 252b. The fan 254 powered by a fan motor 254a, is provided at an end of the blowpipe 252b adjacent to air inlet port 252a, while the heater 250 is provided in an intermediate portion of the blowpipe 252b to heat the air passing therethrough. When the fan 254 rotates, the air is sucked from the washing chamber 204 into the blowpipe 252b through the air inlet port 252a. The sucked air is heated by the heater 250, and is discharged into the washing chamber 204 through the blast port 252c, thus being circulated in the washing chamber 204.

Although the heater 250 and the fan 254 are described as being located in the interior of the door 206, in an alternative embodiment, the heater 250 and the fan 254 are installed at desired positions in or around the dishwasher 202 instead of in the door 206. For example, the heater 250 and the fan 254 may be installed in a casing that is installed outside the cabinet of the dishwasher 202. The heater 250 may also be installed in a position outside the washing chamber and isolated from the washing/rinsing water.

Further two air inlet ports (not shown) may be formed on the door 206 one on the inside facing the washing chamber 204 and the other on the outside of the cabinet, respectively, so that the air of the washing chamber 204 and atmospheric air are sucked into the blowpipe 252b through the two air inlet ports, at the same time, to produce mixed air. In such a case, the mixture of the chamber air and the atmospheric air is heated by the heater prior to discharge into the washing chamber 204. As a further alternative, an air inlet port may be formed at a position facing the outside of the cabinet, so that only the atmospheric air is sucked into the blowpipe 252b through the air inlet port to be heated by the heater, prior to discharge into the washing chamber 204.

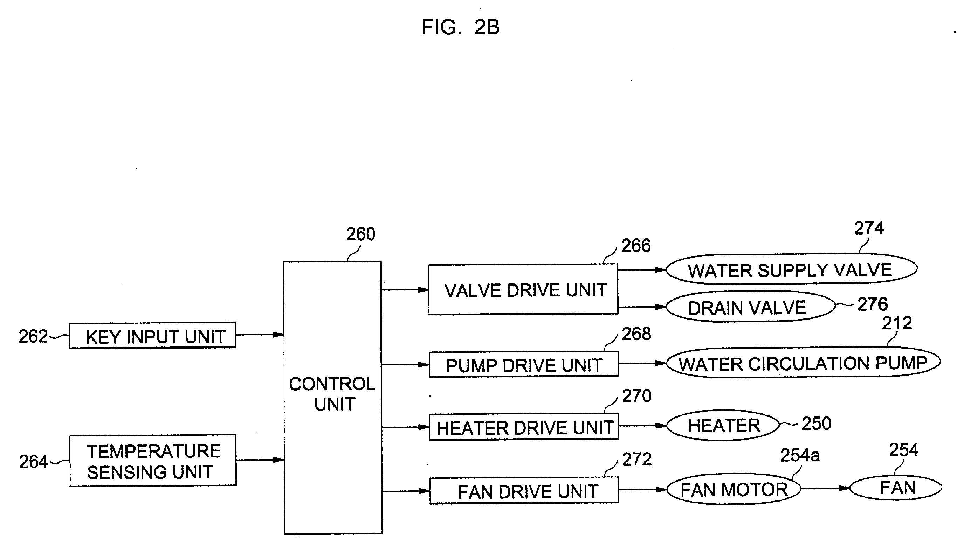

Figure 2B is a block diagram showing a functional construction of the dishwasher 202 of Figure 2A. As shown in Figure 2B, the dishwasher 202 has a control unit 260 to control the overall operation of the dishwasher 202. The control unit 260 is connected at input terminals thereof to a key input unit 262 and a temperature sensing unit 264. The key input unit 262 allows a user to set desired operational conditions of the dishwasher 202, while the temperature sensing unit 264 senses a temperature of the air of the washing chamber 204.

The control unit 260 is connected at output terminals thereof to a valve drive unit 266, a pump drive unit 268, a heater drive unit 270, and a fan drive unit 272. The valve drive unit 266 operates a water supply valve 274 and a drain valve 276, while the pump drive unit 268 and the heater drive unit 270 operate the water circulation pump 212 and the heater 250, respectively. The fan drive unit 272 operates the fan motor 254a to rotate the fan 254. In this arrangement, the above mentioned drive units 266,268,270 and 272 operate in response to control signals output from the control unit 260.

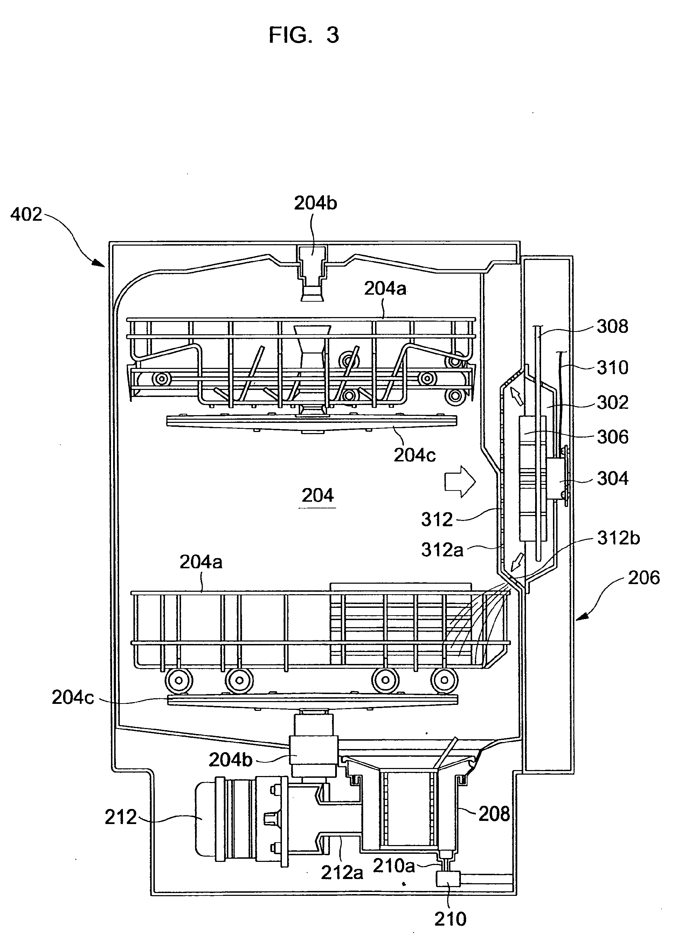

Figure 3 is a sectional view of a dishwasher 402 having an air generator, according to a second embodiment of the present invention. As shown in Figure 3, the dishwasher 402 has a casing 302 in the door 206. The casing 302 defines a space therein and has an opening formed in one surface thereof. A fan 306, a heater 308 and a fan motor 304 are provided in the casing 302. When the heater 308 is electrically turned on to generate heat, air around the heater 308 in the casing 302 is heated. The heated air is discharged from the casing 302 into the washing chamber 204 by a blowing force of the fan 306. A part of the fan motor 304 projects from the casing 302 through a rear wall thereof to mount to an inner surface of the door 206. It should be understood that the fan motor 304 may alternatively be mounted to an inner surface of the casing 302, without affecting an operation of the present invention.

A plate 312 having a plurality of vent holes 312a is installed over the opening of the casing 302, so that the air flows between an interior of the washing chamber 204 and the space of the casing 302 through the plurality of vent holes 312a. Further, some of the water fed into the washing chamber 204 is able to flow into the space of the casing 302 by the spraying action of the spray nozzles 204c through the vent holes 312a, thus being heated. The heated water discharges from the casing 302 into the washing chamber 204 through a water discharging port 312b provided at a lower portion of the plate 312. When the air generator is turned on and, at the same time, the water is fed into the washing chamber 204 of the dishwasher 402 of Figure 3, the air and the water supplied from the washing chamber 204 to the air generator and heater 308 are heated at the same time.

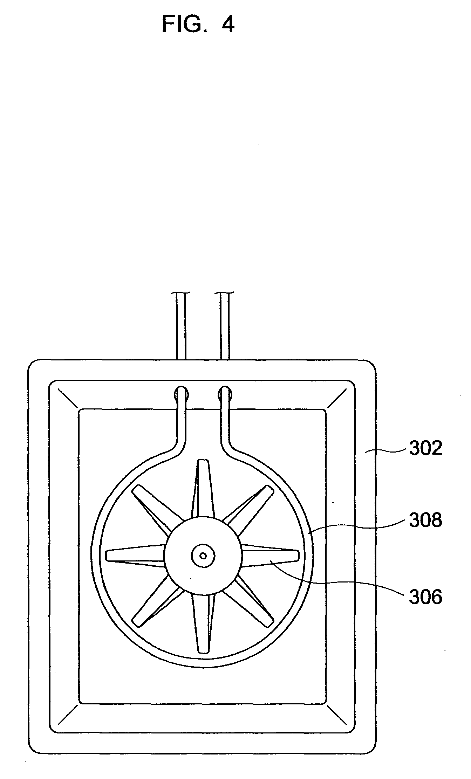

Figure 4 is a front view of the air generator included in the dishwasher 402 of Figure 3. As shown in Figure 4, the fan 306 is rotatably mounted at a centre of the space inside the casing 302, and the heater 308 is installed to surround the fan 306. The fan 306 may be a centrifugal impeller which causes the air to flow in a direction perpendicular to a rotating axis of the impeller. In such a case, the casing 302 is installed such that the opening of the casing 302 faces the washing chamber 204, and the fan 306 is installed in the casing 302 such that a rotating plane of the fan 306 faces the washing chamber 204. An electric wire (not shown) may be connected to each end of the heater 308 so as to supply electric power to the heater 308. The air heated by the heater 308 is discharged from the casing 302 into the washing chamber 204 through the opening of the casing 302 and the vent holes 312a in the plate 312 due to the blowing force of the fan 306.

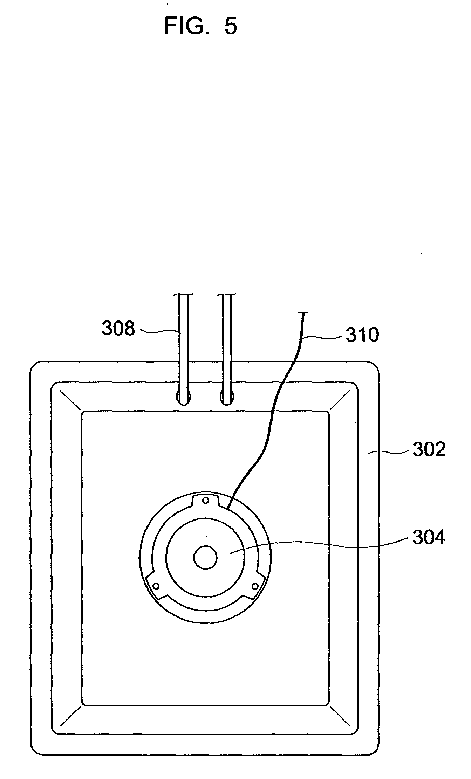

Figure 5 is a rear view of the air generator of Figure 4. As shown in Figure 5, a part of the fan motor 304 projects from the rear wall of the casing 302 so as to be mounted to an inner surface of the door 206. An electric wire 310 is connected to the fan motor 304 to supply electric power to the fan motor 304.

During a washing operation of the dishwasher 402, the air of the washing chamber 204 is heated and, at the same time, the washing water is fed into the washing chamber 204 so that the kitchen utensils and the washing water inside the washing chamber 204 are heated by the heated air. The air of the washing chamber 204 is continuously circulated while the air generator operates until the temperature of the air reaches a preset reference temperature. As the air is heated, the kitchen utensils held in the washing chamber 204 are heated and so oil or other oily food impurities adhering to the kitchen utensils melt. This improves the dishwashing effectiveness and the dishwashing time is therefore remarkably reduced.

In an operation of the dishwasher 202 or 402, air which has a relatively lower specific heat is initially heated so that the temperature in washing chamber 204 is quickly increased to a desired level within a short period of time, and thereafter water having a relatively higher specific heat, is fed into the washing chamber 204 so that it is heated by the heated air to produce hot water. In this way, the dishwasher 202 or 402 is more energy efficient and requires less time for a dishwashing operation compared to conventional dishwashers which directly heat the water. As mentioned above, kitchen utensils held in the upper and lower racks 204c installed in the washing chamber 204 are firstly heated to melt oil or other oily food impurities adhering thereto, and thereafter, the hot water is fed into the washing chamber 204 to wash the kitchen utensils. The required length of necessary operating cycle time of the dishwasher 204 or 402 is therefore reduced and the dishwashing effectiveness is improved over that of known dishwashers. In the dishwasher 202 or 402, the water may alternatively be fed into the washing chamber 204 at the same time of heating the air of the washing chamber 204 to prevent the food impurities from being dried and stuck on the kitchen utensils.

As is apparent from the above description, a dishwasher having an air generator is provided. In an operation of the dishwasher, air which has a relatively lower specific heat is initially heated and thereafter kitchen utensils and washing or rinsing water having a relatively higher specific heat are then heated by the hot air. The dishwasher reduces the necessary length of time required for a dishwashing operation compared with conventional dishwashers which directly heat the water.

In the dishwasher of the present invention, a drying operation is independently performed without necessarily following a rinsing operation that must use hot water. For example, the rinsing cycle may be performed with cold water and the separate subsequent drying operation performed by circulating the air within the chamber over the heating element, thereby heating the kitchen utensils and drying them. As mentioned above, as the specific heat of air is less than that of water, this drying operation is more energy efficient than that of the prior art dishwashers that rely on hot water rinsing as part of the drying operation. Since the heater of the dishwasher is not immersed in the water, as with prior art dishwashers, calcites are not deposited on a surface of the heater, so that the life span of the heater is remarkably lengthened.

Although a few embodiments of the present invention have been shown and described, it would be appreciated by those skilled in the art that changes may be made in these embodiments without departing from the principles of the invention, the scope of which is defined in the claims hereafter.

## Claims

1. A dishwasher having a washing chamber to receive items to be washed in washing water **characterised by** means to generate and supply hot air to the washing chamber to heat said items and/or the washing water, said means including an air heater remote from the chamber.

2. A dishwasher as claimed in claim 1 wherein the air heater is mounted in an airflow conduit having an inlet port and an outlet port.

3. A dishwasher as claimed in claim 2 including a fan operable to blow or draw air through the airflow conduit across the air heater.

4. A dishwasher as claimed in claim 3 wherein the outlet port communicates the airflow conduit with the washing chamber.

5. A dishwasher as claimed in claim 4 wherein the inlet port communicates the washing chamber with the airflow conduit such that air in the chamber circulates through the airflow conduit via the inlet and outlet ports.

6. A dishwasher as claimed in claim 4 wherein the inlet port communicates the airflow conduit with the outside of the dishwasher such that air is drawn into the chamber through the airflow conduit from outside.

7. A dishwasher as claimed in claim 6 wherein a second inlet port communicates the washing chamber with the airflow conduit such that air is drawn into the chamber via the airflow conduit from the washing chamber through the second inlet port and also from outside through the first inlet port.

8. A dishwasher as claimed in any of claims 3 to 7 including a casing, the airflow conduit extending through the casing and the fan and the heater being located therein.

9. A dishwasher as claimed in claim 8 wherein the casing is mounted to a wall of the washing chamber and the outlet port comprises a plurality of holes in the wall of the chamber.

10. A dishwasher as claimed in claim 9 wherein the wall of the chamber includes a drainage hole therein to allow water to drain from the casing into the chamber.

11. A dishwasher according to claim 9 or 10 wherein said wall of the chamber is a door openable to gain access to the chamber.

12. A dishwasher as claimed in any of claims 3 to 11 wherein the fan is a centrifugal impeller that causes air to flow in a direction perpendicular to the axis of rotation of the impeller.

13. A method of heating air and/or water in a dishwasher comprising a chamber to receive items to be washed in washing water and an air heater remote from the chamber, the method including the step of heating air using the heater and supplying said heated air to said chamber.

14. A dishwasher having a washing chamber comprising an air generator to heat air of the washing chamber.

15. The dishwasher according to claim 14 wherein the air generator comprises a heater to heat the air of the washing chamber.

16. The dishwasher according to claim 15 wherein the heater is not immersed in water fed into the washing chamber.

17. The dishwasher according to any of claims 14-16 wherein the air generator further comprises a fan to circulate the air flowing around the heater.

18. The dishwasher according to any of claims 14-17 wherein the air generator comprises a blowpipe, a fan provided at an open end of the blowpipe to circulate the air from the blowpipe into the washing chamber, and a heater provided in the blow pipe to heat the air flowing through the blowpipe.

19. The dishwasher according to claim 18 further comprising a door to open or to close the washing chamber, wherein the heater and the fan are provided in the door, to heat and circulate the air of the washing chamber.

20. The dishwasher according to claim 19 further comprising an air inlet port disposed with the door and a blast port at a surface of the door facing the washing chamber, the air inlet port and the blast port communicating with each other through the blowpipe.

21. The dishwasher according to any of claims 18-20 wherein the heater is provided at an intermediate position inside the blowpipe.

22. The dishwasher according to any of claims 18-21 further comprising a cabinet to define an external appearance of the dishwasher, wherein the heater and the fan are provided in the cabinet.

23. The dishwasher according to any of claims 18-22 wherein the blowpipe comprises an air inlet port provided at a position facing the washing chamber or facing an outside of the dishwasher, and a blast port provided at a position facing the washing chamber, wherein the air inlet port and the blast port communicate with each other through the blowpipe.

24. The dishwasher according to any of claims 18-23 wherein the fan sucks atmospheric air into the washing chamber or circulates the air of the washing chamber.

25. The dishwasher according to claim 14 wherein the air generator comprises a casing to define a space therein, with an opening formed at a surface of the casing, a fan provided in the casing to cause the air to circulate through the opening of the casing and a heater provided at a position around the fan to heat the air flowing around the fan.

26. The dishwasher according to claim 25 wherein the fan is a centrifugal impeller which causes the air to flow in a direction perpendicular to a rotating axis of the centrifugal impeller.

27. The dishwasher according to either of claims 25 or 26 wherein the opening of the casing faces the washing chamber, and the fan is provided in the casing such that a rotating plane of the fan faces the washing chamber.

28. The dishwasher according to any of claims 25-27 wherein the air generator further comprises a plate having a plurality of vent holes installed at the opening of the casing so that the air flows between an interior of the washing chamber and the space of the casing through the plurality of vent holes of the plate.

29. The dishwasher according to claim 28 wherein some of the water fed into the washing chamber flows into the space of the casing through the plurality of vent holes of the plate.

30. The dishwasher according to any of claims 25-29 wherein a part of the fan projects from the casing to mount to an interior surface of a door of the dishwasher.

31. The dishwasher according to any of claims 28-30 wherein the plate comprises a water discharging port provided at a lower portion of the plate such that the heated water discharges from the casing into the washing chamber through the water discharging port.

32. The dishwasher according to any preceding claim wherein when the air generator is turned on and the water is fed into the washing chamber, the air and the water are heated simultaneously.

33. A dishwasher with a washing chamber comprising an air generator heating and circulating air the washing chamber.

34. The dishwasher according to claim 33 wherein the air generator comprises a blowpipe circulating the air in the washing chamber and a heater disposed in the blowpipe to heat the air in the washing chamber circulated through the blowpipe.

35. The dishwasher according to claim 34 wherein the air generator further comprises a fan to suck the air in the washing chamber to one side of the blowpipe

36. The dishwasher according to any of claims 33-35 further comprising an input unit to set a temperature of the air in the dishwasher, a temperature detecting unit to detect the temperature of the air of the washing chamber and a control unit to control the detected temperature according to the set temperature.

37. The dishwasher according to claim 33 wherein the air generator comprises a blowpipe, a fan disposed at one opening of the blowpipe to circulate the air through the blowpipe and within the washing chamber and a heater disposed in the blowpipe to heat the air circulated through the blowpipe.

38. The dishwasher according to claim 37 further comprising a door selectively closing the washing chamber, wherein the heater and the fan are disposed in the door to heat and to circulate air in the washing chamber respectively.

39. The dishwasher according to claim 38 wherein the door further comprises an air inlet and a blast port disposed in a surface of the door facing the washing chamber, and the air inlet and the blast port communicating with each other through the blowpipe.

40. The dishwasher according to any of claims 33-39 wherein the heater is disposed in a middle portion of the blowpipe.

41. The dishwasher according to claim 37 wherein the heater and the fan are disposed at positions outside of the washing chamber.

42. The dishwasher according to claim 37 further comprising a cabinet defining an external appearance of the dishwasher and wherein the heater and the fan are disposed at positions inside of the cabinet of the dishwasher.

43. The dishwasher according to any of claims 37, 41 or 42 wherein the blowpipe comprises a first air inlet disposed facing one of the washing chamber and an outside of the dishwasher and a blast port disposed facing the washing chamber, the first air inlet communicating with the blast port through the blowpipe.

44. The dishwasher according to claim 43 wherein the blowpipe comprises a second air inlet disposed facing another one of the washing chamber and an outside of the dishwasher such that the air from both the washing chamber and air from outside of the dishwasher are sucked into the first and second air inlets, respectively, and mixed in the blowpipe.

45. The dishwasher according to claim 43 wherein the fan either sucks external air into the washing chamber or recirculates air from within the washing chamber.

46. The dishwasher according to claim 37 wherein the heater is not immersed in the water supplied to the washing chamber.

47. A method of controlling a dishwasher having a washing chamber comprising heating air supplied to the washing chamber and supplying water into the washing chamber and generating hot water through a heat exchange between the heated air and the supplied water.

48. The method according to claim 47 further comprising circulating the air through a pipe and within the washing chamber, the heating of the air occurring as the air is circulated through the pipe.

49. The method according to either of claims 47 or 48 further comprising drying the dishes by only the heated air from the heating of the air.

50. A method of controlling a dishwasher having a washing chamber comprising heating air in the washing chamber, supplying water into the washing chamber, circulating the heated air such that a heat exchange between the heated air and the supplied water occurs, and washing dishes using the heated water.

51. A dishwasher with a washing chamber comprising an air generator heating air in the washing chamber to exchange heat between the heated air and water supplied to the washing chamber so as to heat the water supplied thereto, the air having a specific heat lower than that of the water.

52. A method of controlling a dishwasher having a washing chamber comprising heating air supplied to the washing chamber, supplying water into the washing chamber and circulating the heated air such that a heat exchange between the heated air and the supplied water occurs, the air having a specific heat lower than that of the water.

53. A method of controlling a dishwasher having a washing chamber comprising heating air supplied to the washing chamber, and drying dishes in the washing chamber by only using the heated air.

54. A method of controlling a dishwasher having a washing chamber comprising heating air supplied to the washing chamber using a heater, and supplying water into the washing chamber and generating hot water through a heat exchange between the heated air and the supplied water, wherein the heater is not submerged in the water supplied to the washing chamber.

55. A dishwasher with a washing chamber comprising an air generator heating air in the washing chamber, and a water supply unit supplying water into the washing chamber such that the air generator is not submerged in the water supplied to the washing chamber.

56. A method of controlling a dishwasher having washing chamber comprising heating air supplied to the washing chamber to indirectly heat water used during a dishwashing operation.
